## Europäisches Patentamt

## European Patent Office

## Office européen des brevets

(11) Veröffentlichungsnummer: **0 144 666**
A2

(12) **EUROPÄISCHE PATENTANMELDUNG**

(21) Anmeldenummer: **84112699.8**

(22) Anmeldetag: **20.10.84**

(51) Int. Cl.⁴: **B 29 B 17/02**

(30) Priorität: **08.11.83 DE 3340273**

(43) Veröffentlichungstag der Anmeldung:
**19.06.85 Patentblatt 85/25**

(84) Benannte Vertragsstaaten:
**AT BE CH DE FR GB IT LI LU NL SE**

(71) Anmelder: **Drzevitzky, Bernd**
**Asternweg 126**
**D-5024 Pulheim(DE)**

(71) Anmelder: **Gerhardt, Hans**
**Andersenstrasse 23**
**D-4100 Duisburg 1(DE)**

(71) Anmelder: **Haas, Johannes**
**Jacobsallee 4**
**D-4300 Essen(DE)**

(72) Erfinder: **Drzevitzky, Bernd**
**Asternweg 126**
**D-5024 Pulheim(DE)**

(72) Erfinder: **Gerhardt, Hans**
**Andersenstrasse 23**
**D-4100 Duisburg 1(DE)**

(72) Erfinder: **Haas, Johannes**
**Jacobsallee 4**
**D-4300 Essen(DE)**

(74) Vertreter: **Selting, Günther, Dipl.-Ing. et al,**
**Deichmannhaus am Hauptbahnhof**
**D-5000 Köln 1(DE)**

(54) **Verfahren und Vorrichtung zur Verwertung von kunststoffbeschichteten Kabelresten.**

(57) Die Kabelreste werden in ein Bad (15) eingegeben, das ein flüssiges Quellmittel enthält, welches die Kunststoffteile aufquellen läßt und brüchig macht. Anschließend an den Quellvorgang werden die Kabelreste einer Waschstation (25) zugeführt und mit scharfen Strahlen aus Sprühdüsen (32') besprüht, wobei die Kunststoffmäntel der Kabelreste durch den Strahldruck zerkrümmelt werden. Die Kunststoffteile (33) werden durch eine Trennvorrichtung (31) von den Metallteilen (38) getrennt. Das Verfahren hat den Vorteil, daß keine chemische Umsetzung bei den Metallteilen und bei den Kunststoffteilen erfolgt und daß keine schädlichen Abgase entstehen.

FIG. 1

EP 0 144 666 A2

Verfahren und Vorrichtung zur Verwertung von
kunststoffbeschichteten Kabelresten
----------------------------------------------------

Die Erfindung betrifft ein Verfahren zur Verwertung von
kunststoffbeschichteten Kabelresten, bei welchem die in
den Kabeln enthaltenen Metallteile abgeschieden werden.

Kabel bestehen generell aus einer metallischen Kabelseele, vorwiegend aus Kupfer, und einem Kabelmantel,
der in der Regel aus Polyvinylchlorid (PVC) besteht.
Zur Rückgewinnung des hochwertigen Kupfers aus Kabelresten ist es bekannt, den PVC-Mantel unter hohen Temperaturen zu verschwelen bzw. zu verbrennen, wobei die
Metallseele übrigbleibt. Bei der Verschwelung von

- 2 -

Kunststoff, insbesondere von PVC, entstehen säurehaltige Abgase, die eine starke Umweltbelastung darstellen. Ferner wird beim Verbrennen oder Verschwelen hochwertiger Kunststoff vernichtet.

Der Erfindung liegt die Aufgabe zugrunde, ein Verfahren der eingangs genannten Art anzugeben, das umweltfreundlich ist, einen relativ geringen Energiebedarf erfordert, und das nicht nur eine Wiederverwertung der Metallteile, sondern auch eine Wiederverwertung der Kunststoffteile ermöglicht.

Die Lösung dieser Aufgabe besteht erfindungsgemäß darin, daß die Kunststoffteile zum Aufquellen gebracht und anschließend unter Einsatz scharfer Sprühstrahlen von den Metallteilen abgelöst werden.

Bei dem erfindungsgemäßen Verfahren werden die Kabelreste der Wirkung eines Quellmittels ausgesetzt, bei dem die Kunststoffbeschichtung aufquillt und weich und brüchig wird. Anschließend erfolgt das Ablösen des Kunststoffs von der metallischen Kabelseele durch Absprühen mit Flüssigkeit oder mit einem Gas. Der aufgeweichte Kunststoff löst sich hierbei unter Druckstrahleinwirkung von der Kabelseele und zerbricht bzw. zerkrümmelt in zahlreiche kleine Stücke. Die Kunststoffteile können anschließend gesammelt und im Recycling-Verfahren zur Herstellung anderer Kunststoffprodukte wiederverwendet werden. In gleicher Weise können auch die Metallteile wiederverwendet werden.

- 3 -

Bei dem erfindungsgemäßen Verfahren erfolgt keine spanabhebende mechanische Einwirkung auf die Metallteile, so daß keine Metallspäne in den Kunststoff gelangen. Dies ist wichtig, weil die Qualität von PVC durch eingeschlossene Kunststoffpartikel verschlechtert wird. Würde der Kunststoffmantel mechanisch, z.B. durch Abschaben, von der Kabelseele getrennt werden, dann würde das Kunststoffmaterial zahlreiche Metallspäne enthalten. Bei dem erfindungsgemäßen Verfahren erfolgt die Trennung dagegen auf schonende Weise durch Absprühen oder Abblasen des vorbehandelten Kunststoffmaterials ohne spanabhebende Einwirkung auf die Metallteile. Das Kunststoffmaterial, das lediglich zum Aufquellen gebracht wird, aber keine chemische Umwandlung erleidet, kann anschließend von neuem unter Zusatz entsprechender Additive, wie Weichmacher, Härtungsmittel u.dgl. verwendet werden.

Eine Vorrichtung zur Durchführung des erfindungsgemäßen Verfahrens ist gekennzeichnet durch

a) ein ein Quellmittel enthaltendes Bad zum Behandeln der Kabelreste,

b) eine Waschstation, die zahlreiche auf die Kabelreste gerichtete Sprühdüsen aufweist und

c) eine Trennvorrichtung zum Trennen der abgelösten Kunststoffteile von den Metallteilen.

Die Waschstation kann entweder ein Gas, z.B. Luft, oder eine Flüssigkeit, z.B. Wasser versprühen. Wichtig ist, daß die Kabelreste mit scharfen Strahlen angesprüht werden, damit sie sich unter Zerkrümmelung von den Metallteilen lösen. Die zerkleinerten Kunststoffteile brauchen dann nur noch von den Metallteilen entfernt zu werden. Dieses Entfernen erfolgt in einer Trenneinrichtung, die vorzugsweise mit der Waschstation vereinigt ist. Da die Kunststoffteile leichter sind als die Metallteile, lassen sie sich relativ leicht von diesen trennen. Außerdem haben die Metallteile in der Regel eine gewisse Mindestlänge, so daß sie ein Gitter nicht oder nur schwer passieren können, das von den zerkrümmelten Kunststoffteilen ohne weiteres passiert werden kann. Eine andere Art der Trennung von Kunststoffteilen und Metallteilen ist nach dem Flotationsverfahren möglich. Da der Kunststoff ein geringeres spezifisches Gewicht als Wasser (oder eine andere Flüssigkeit) hat, kann die Trennung auf einfache Weise in einem Bad erfolgen, bei dem nur solche Teile auf der Oberfläche schwimmen, die kein Metall enthalten, sondern ausschließlich aus Kunststoff bestehen. Andere mögliche Trenneinrichtungen sind Dichtescheider, z.B. Zyklone.

Das erfindungsgemäße Verfahren kann entweder im Schrittbetrieb durchgeführt werden, wobei die Kabelreste jeweils in einem Behälter, z.B. einem Korb mit Siebboden, von einer Behandlungsstation zur nächsten befördert werden und in jeder Behandlungsstation stationär verweilen, oder im kontinuierlichen Durchlaufbetrieb. Eine Vorrichtung für einen kontinuierlichen Durchlaufbetrieb ist gemäß einer bevorzugten Weiterbildung der Erfindung gekennzeichnet durch eine die Kabelreste durch das Bad transportierende erste Fördereinrichtung, eine durch die Waschstation laufende zweite Fördereinrichtung und eine die abgetrennten Metallteile aus der Trenneinrichtung abführende dritte Fördereinrichtung. Die Trenneinrichtung besteht vorzugsweise aus Öffnungen, die in einem Kanal vorgesehen sind, dessen Boden die zweite Fördereinrichtung bildet. Hierbei ist die Trenneinrichtung in die Waschstation integriert. Das Sprühmittel, das in der Waschstation auf die Kabelreste gesprüht wird, um die Kunststoffteile von den Metallteilen abzulösen, wird gleichzeitig dazu benutzt, die Kunststoffteile von den Metallteilen fortzuspülen.

Gemäß einer bevorzugten Weiterbildung der Erfindung ist vorgesehen, daß unter der Trenneinrichtung eine Wanne zur Aufnahme abtropfender Sprühflüssigkeit angeordnet ist und daß ein Abschöpfförderer zum Abführen der auf der Sprühflüssigkeit in der Wanne schwimmenden Kunststoffteile vorgesehen ist. Sollten sich unter den Kunststoffteilen noch Metallteile oder solche Kunststoffteile befinden, die Metallteile enthalten, dann sinken diese Fremdteile, die nicht ausschließlich aus Kunststoff bestehen, auf den Boden der Wanne ab, während nur die reinen Kunststoffteile aufschwemmen und von dem Abschöpfförderer entfernt werden.

Zweckmäßigerweise ist hinter der Trennvorrichtung im Wege der Metallteile und/oder im Wege der Kunststoffteile eine Trocknungseinrichtung vorgesehen. Die Trocknungseinrichtung dient dazu, die Sprühflüssigkeit

- 6 -

aus den Metallteilen bzw. Kunststoffteilen zu entfernen.

Hinter der Trennvorrichtung kann im Wege der Kunststoffteile noch ein Metallabscheider angeordnet sein, der
vorzugsweise aus einem galvanischen Bad besteht. In
einem derartigen Metallabscheider gehen die in dem
Kunststoff noch vorhandenen Metallpartikel in Lösung,
um sich an einer Elektrode abzusetzen. Auf diese Weise
kann man eine vollständige Abscheidung selbst der
kleinsten Metallteile aus der Kunststoffmasse erreichen.
Die Kunststoffteile werden selbst von kleinsten anhaftenden Metallpartikeln durch Elektrolyse entfernt, so daß
das körnige Kunststoffmaterial anschließend wieder aufbereitet werden kann, um für die Herstellung anderer
Kunststoffartikel benutzt zu werden.

Im folgenden wird unter Bezugnahme auf die Zeichnungen
ein Ausführungsbeispiel der Erfindung näher erläutert.

Es zeigen:

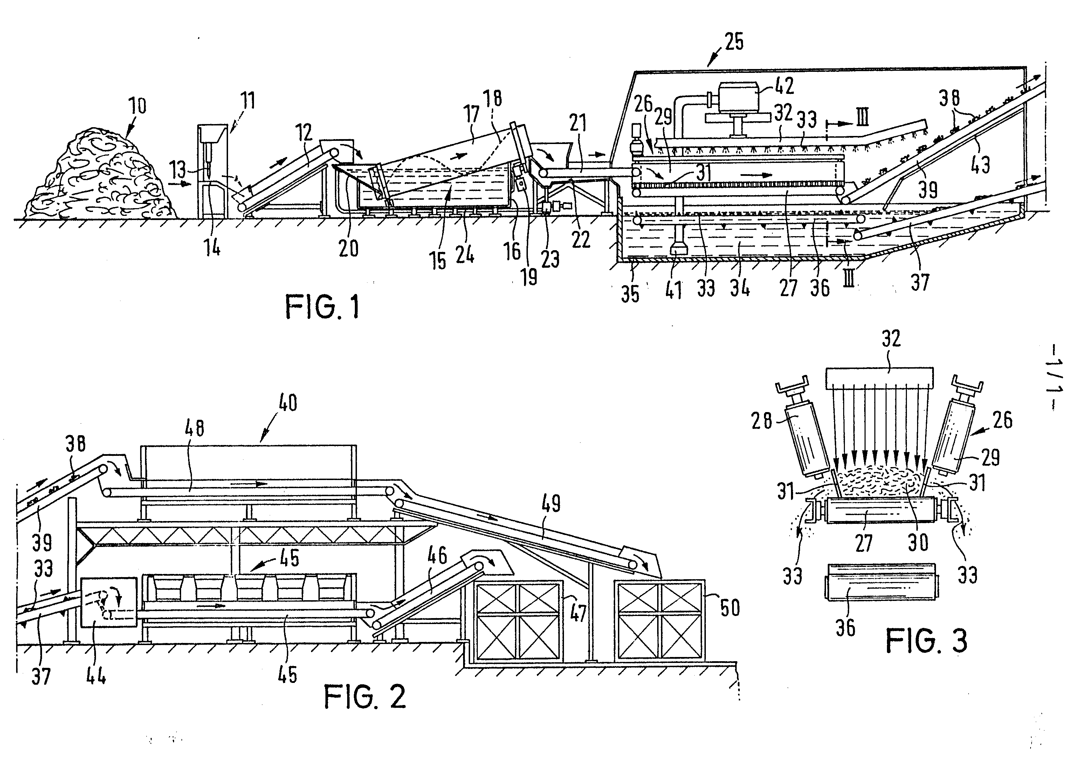

Fig. 1   den ersten Teil einer Aufbereitungsanlage für
         Kabelreste bis zu der Waschstation,

Fig. 2   den sich an die Waschstation anschließenden
         zweiten Teil der Aufbereitungsanlage und

Fig. 3   einen schematischen Schnitt entlang der Linie
         III-III von Fig. 1.

Die zu verarbeitenden Kabelreste sind regellos auf einer Kabelhalde 10 zu einem Haufen aufgeschüttet. Von der Kabelhalde 10 werden von Hand oder mit einer Ladevorrichtung kleinere Portionen der Kabelreste durch eine Trennvorrichtung 11 hindurch auf einen Förderer 12 aufgegeben. Die Trennvorrichtung weist ein vertikal bewegbares Messer 13 auf, das sich in einem Fenster über einem horizontalen Tisch 14 bewegt. Wenn das Messer 13 abgesenkt wird, durchtrennt es die auf dem Tisch 14 liegenden Kabelreste, wodurch einzelne Portionen an Kabelresten erzeugt werden, die auf den Förderer 12 fallen. Das abwurfseitige Ende des Förderers 12 befindet sich über einem Bad 15, das in einer Wanne 16 eine Quellflüssigkeit enthält. In das Bad 15 taucht das Einlaßende einer schräg angeordneten Fördertrommel 17 ein, die eine Schnecke 18 enthält. Die Fördertrommel 17 ist drehbar gelagert und wird von einem Antriebsmotor 19 um ihre Längsachse gedreht. Ein Teil der Fördertrommel 17 taucht in die Quellflüssigkeit ein. Die Kabelreste, die über eine Rutsche 20 in das eingetauchte Einlaßende der Trommel 17 eingeführt werden, werden von der Schnecke 18 im Innern der Fördertrommel 17 in der Quellflüssigkeit umgewälzt und dabei langsam aus der Wanne 16 heraustransportiert. Das abwurfseitige Ende der Fördertrommel 17 ist über einem Förderer 21 angeordnet, unter dem sich eine Auffangwanne 22 befindet. Die auf dem Förderer 21 von den Kabelresten abtropfende Quellflüssigkeit wird in der Auffangwanne 22 gesammelt und gelangt über eine Pumpe 23 in eine Rücklaufleitung 24, die in die Wanne 16 mündet.

Das abwurfseitige Ende des Förderers 21 befindet sich im Innern der Waschstation 25 und wirft die Kabelreste über der Fördereinrichtung 26 ab. Die Fördereinrichtung 26 besteht aus einem horizontalen Förderband 27 und zwei seitlichen Förderbändern 28, 29. Die Förderbänder 27,28 und 29 bilden einen Trog zur Aufnahme der Kabelreste 30. In den unteren Seitenwänden des Troges befinden sich unterhalb der seitlichen Förderbänder 28 und 29 Gitter, die die Trenneinrichtung 31 bilden. Die Förderbänder 27,28 und 29 sind von Motoren in derselben Laufrichtung angetrieben, wobei jedoch die Antriebsgeschwindigkeiten unterschiedlich sein können, um eine Agitation der Kabelreste hervorzurufen.

Über dem Förderer 27 ist eine Sprühvorrichtung 32 mit zahlreichen nach unten gerichteten Sprühdüsen 33 angeordnet. Aus den Sprühdüsen 33 wird eine Flüssigkeit mit hohem Druck gegen die Kabelreste 30 gesprüht. Hierbei werden die Kunststoffummantelungen, die zuvor aufgequollen sind, unter der Wirkung der scharfen Sprühstrahlen zerstört, wobei eine krümmelige Kunststoffmasse entsteht. Die von den Metallteilen abgelösten Kunststoffteile 33 werden durch die Öffnungen der Trennvorrichtung seitlich ausgespült und fallen in eine mit einer Flüssigkeit 34 gefüllte Wanne 35. Die Kunststoffteile 33 schwimmen in der Flüssigkeit 34 auf und werden durch einen Abschöpfförderer 36 von der Flüssigkeitsoberfläche abgezogen und einem weiteren Förderer 37 zugeführt, der die Kunststoffteile aus der Wanne 35 abführt. Am Ende der Fördereinrichtung 26 liegen auf dem Förderband 27 nur noch die Metallteile 38. Diese Metallteile 38 werden auf einen Schrägförderer 39 aufgegeben und von der Waschstation 25 zu einer
Trocknungseinrichtung 40 befördert.

Sofern durch die Trennvorrichtung 31 hindurch Metallteile in die Wanne 35 gelangen, sinken die Metallteile
auf den Wannenboden ab. Andererseits wird die Sprühflüssigkeit aus der Wanne 35 durch ein Ansaugsystem 41
mit Filter angesaugt und über eine Pumpe 42 der Sprühvorrichtung 32 wieder zugeführt. Auf diese Weise wird
die Sprühflüssigkeit ständig rezirkuliert, so daß nur
die Verdunstungs- und Abtropfverluste ersetzt werden
müssen.

Die Sprühvorrichtung 32 erstreckt sich bis über den
Schrägförderer 39 für die Metallteile 38. Die Metallteile 38 werden daher auch noch im Bereich des Schrägförderers 39 mit scharfen Sprühstrahlen bearbeitet, um
noch anhaftende Restpartikel des Kunststoffs zu entfernen. Unter dem Schrägförderer 39 befindet sich ein
Ablaufblech 43, das die ablaufende Sprühflüssigkeit in
die Wanne 34 leitet.

Der Förderer 37 transportiert die abgeschöpften Kunststoffteile 33 in ein galvanisches Bad 44, wo durch
Elektrolyse selbst feinste Metallteilchen, die noch in
der Kunststoffmasse vorhanden sein könnten, abgetrennt
werden. Das galvanische Bad 44 enthält (nicht dargestellte) Elektroden zur elektrolytischen Abscheidung
der Metallteile.

Nach Verlassen des galvanischen Bades 44 werden die Kunststoffteile 33, eventuell nach einer Spülung, einer Trocknungsvorrichtung 45 zugeführt, durch die sie auf einem Förderer 45 hindurchlaufen. Nach Verlassen der Trocknungsvorrichtung 45, in der beheizte Luft gegen die Kunststoffteile geblasen wird, gelangen die Kunststoffteile über einen weiteren Förderer 46 in einen Sammelbehälter 47.

Die Metallteile, die auf dem Förderer 48 durch die Trocknungsvorrichtung 40 transportiert worden sind, werden über einen weiteren Förderer 49 einem Sammelbehälter 50 für Metallteile zugeführt.

Das erfindungsgemäße Verfahren und die beschriebene Vorrichtung eignen sich insbesondere für die Verarbeitung von Kabeln mit PVC-Ummantelungen. Das PVC-Material wird von den Kabeladern, die in der Regel aus Kupfer oder einer Kupferlegierung bestehen, vollständig und sauber getrennt, wobei sowohl die Metallteile als auch die Kunststoffteile ohne chemische Zersetzung oder Umwandlung voneinander getrennt werden, um anschließend als Rohmaterial wiederverwendet zu werden. Ein besonderer Vorteil besteht darin, daß bei dem Verfahren keine Umweltverschmutzung eintritt, und daß keine schädlichen Abgase erzeugt werden.

ANSPRÜCHE
_____

1. Verfahren zur Verwertung von kunststoffbeschichteten Kabelresten, bei welchem die in den Kabeln enthaltenen Metallteile abgeschieden werden, d a d u r c h g e k e n n z e i c h n e t , daß die Kunststoffteile (33) zum Aufquellen gebracht und anschließend unter Einsatz scharfer Sprühstrahlen von den Metallteilen (38) abgelöst werden.

2. Verfahren nach Anspruch 1, dadurch gekennzeichnet, daß die Kunststoffteile (33) einem Abscheidevorgang zum Entfernen noch vorhandener Reste von Metallteilen unterzogen werden.

3. Vorrichtung zur Durchführung des Verfahrens nach einem der Ansprüche 1 oder 2, g e k e n n z e i c h n e t d u r c h

    a) ein ein Quellmittel enthaltendes Bad (15) zum Behandeln der Kabelreste (30),

    b) eine Waschstation (25), die zahlreiche auf die Kabelreste (30) gerichtete Sprühdüsen (33) aufweist und

    c) eine Trenneinrichtung (31) zum Trennen der abgelösten Kunststoffteile (33) von den Metallteilen (38).

4. Vorrichtung nach Anspruch 3, gekennzeichnet durch eine die Kabelreste (30) durch das Bad (15) transportierende erste Fördereinrichtung (17), eine durch die Waschstation (25) laufende zweite Fördereinrichtung (26) und eine die abgetrennten Metallteile (38) aus der Trenneinrichtung (31) abführende dritte Fördereinrichtung (39).

5. Vorrichtung nach Anspruch 3 oder 4, dadurch gekennzeichnet, daß die Trenneinrichtung (31) aus Öffnungen besteht, die in einem Kanal vorgesehen sind, dessen Boden die zweite Fördereinrichtung (26) bildet.

6. Vorrichtung nach einem der Ansprüche 3 bis 5, dadurch gekennzeichnet, daß unter der Trenneinrichtung (31) eine Wanne (35) zur Aufnahme abtropfender Sprühflüssigkeit (34) angeordnet ist und daß ein Abschöpfförderer (36) zum Abführen der auf der Sprühflüssigkeit (34) in der Wanne (35) schwimmenden Kunststoffteile (33) vorgesehen ist.

7. Vorrichtung nach einem der Ansprüche 3 bis 6, dadurch gekennzeichnet, daß hinter der Trennvorrichtung (31) im Wege der Metallteile (38) und/oder im Wege der Kunststoffteile (33) eine Trocknungseinrichtung (40,45) vorgesehen ist.

8. Vorrichtung nach einem der Ansprüche 3 bis 7, dadurch gekennzeichnet, daß hinter der Trennvorrichtung (31) im Wege der Kunststoffteile (33) ein Metallabscheider angeordnet ist.

9. Vorrichtung nach Anspruch 8, dadurch gekennzeichnet, daß der Metallabscheider aus einem galvanischen Bad (44) besteht.

FIG. 1

FIG. 2

FIG. 3

-1/1-

0144666